# EUROPEAN PATENT SPECIFICATION

(11) **EP 1 335 375 B1**
(45) Date of publication and mention of the grant of the patent: **27.06.2007**
(21) Application number: 03250760.0
(22) Date of filing: 06.02.2003
(51) Int. Cl.: G11B 27/034, G11B 27/36, G11B 20/00, G11B 20/18, G11B 27/34, G11B 20/10

(54) **System and method for improving use of a recording medium**
Anordnung und Verfahren zur besseren Verwendung eines Speichermediums
Système et méthode pour améliorer l'utilisation d'un support d'enregistrement

(30) Priority: 09.02.2002 KR 2002007752
(43) Date of publication of application: 13.08.2003
(73) Proprietor: SAMSUNG ELECTRONICS CO., LTD., Suwon-si, Gyeonggi-do 442-742 (KR)
(72) Inventor: Kim, Jong-phil, Suwon-city, Gyunggi-do (KR)
(74) Representative: Geary, Stuart Lloyd

(56) References cited:
- EP-A- 0 584 991
- EP-A- 0 685 969
- EP-A- 0 929 072
- EP-A- 1 168 347
- EP-A- 1 195 768

## Description

The present invention relates to a recording apparatus for recording data on a recording medium, the apparatus comprising user input means, display means, a recording medium and control means, the control means being configured to record data on the recording medium in dependence on a user input from the user input means.

Many various AV systems exist, such as televisions, VTRs (video tape recorders), DVD (digital versatile disc) players, hi-fi systems, portable cassette players, MP3 devices, and so on. Recently, to meet the requirement of various users, a new type of AV system has been developed which includes a DVD player and VTR in one system.

AV systems have been improved to upgrade the quality of audio and video signals they record and reproduce. Therefore, the type of data processing performed by such AV systems has changed from analog to digital. Specifically, these AV systems require accurate compression encoding and decoding of the video and audio signals, as well as an internal recording medium in order to store vast amounts of data and retrieve the data.

A hard disk, a CD-ROM (compact disk read-only memory), an erasable optical disk, or a magnetic tape can be used as the recording medium. Currently, the most broadly used recording medium for an AV system is a hard disk.

A hard disk is usually referred to as a drive disk, a hard drive, or a hard disk drive. The hard disk is disk-shaped and is typically made of plastic or metal that is coated with magnetic material and can be read or written to by a head, which includes a conductive coil. When data is stored on the hard disk, the disk is generally composed of logical units referred to as clusters. A cluster is not a physical unit formed on the hard disk itself, but rather a logical unit. Hence, the magnitude and configuration of a cluster can vary in accordance with the application or environment in which the data being stored on the hard disk is used.

As can be appreciated by one skilled in the art, a hard disk is widely used as the recording medium in existing computer environments, such as Windows^{®}. When data is stored on the hard disk in a computer environment such as Windows^{®}, a control circuit in the computer compares storage capacity remaining in the hard disk with the amount of the data to be recorded. When the amount of the data to be recorded exceeds the storage capacity remaining in the hard disk, a message stating that the data cannot be recorded due to the lack of the capacity is shown, and the recording operation is stopped.

Unlike the above case, when data that is being consecutively input into the computer is stored on the hard disk, the total amount of the data to be recorded cannot be known in advance. Therefore, the user is informed that there is no more space on the hard disk for recording, and the recording operation is stopped after the empty space available for recording in the hard disk is consumed.

When the user records music, movies, dramas and so on using the AV system, the data is consecutively recorded for a recording period, and hence, the total amount of data to be recorded generally cannot be known in advance. Moreover, the control circuit of the AV system cannot determine whether or not the remaining storage capacity of the recording medium is sufficient for recording, and the user also does not know how much space is needed for recording. Furthermore, even though the user may know the remaining storage capacity of the hard disk in advance, the user would only know this capacity in terms of remaining byte space. Thus, the user would not know the amount of remaining storage capacity in terms of recording time.

Accordingly, when the storage capacity of the recording medium, such as a hard disk, is used up during the recording operation performed by the AV system, the recording operation is suddenly stopped without any warning. This kind of inconvenience often occurs when performing reservation recording, in which a portion of the recording medium is intended to be "reserved" to store data being recorded. Thus, the reservation recording is stopped without completing the operation.

EP-A-0 929 072 describes an apparatus having the pre-characterising features of claim 1 appended hereto.

A recording apparatus for recording data on a recording medium, according to the present invention, is defined in claim 1 appended hereto.

Preferably, the control means is configured to delete user-selected pre-recorded data from the recording medium in accordance with user inputs from the user input.
Still more preferably, the control means is configured to store position information of the pre-recorded data earmarked for deletion and continue the recording operation. Yet more preferably, the control means is configured to record the data to parts of the recording medium corresponding to the position information of the pre-recorded data earmarked for deletion, when the recording medium reaches it's full capacity.

Preferably, the control means is configured to determine the available storage capacity of the recording medium prior to the recording of data on the recording medium and to set said threshold amount in dependence on the period during which said data is to be recorded, determined from user input start and stop times from the user input means, and the compression rate at which said data is to be recorded. More preferably, the control means is configured to proceed with the recording of said data in accordance with the user input start and stop times when the remaining storage capacity of the recording medium is determined to be greater than said threshold amount.

More preferably, the control means is configured to control the display means to inform the user of the possibility of cancelling the recording operation when the remaining storage capacity of the recording medium is determined to be less than said threshold amount. More preferably, the control means is configured to control the display means to inform the user of the possibility of increasing the compression rate at which said data is to be recorded when the remaining storage capacity of the recording medium is determined to be less than said threshold amount. Even more preferably, the control means is configured to proceed with the recording of said data in accordance with the user input start and stop times at an increased compression rate. Yet more preferably, the control means is configured to control the display means to inform the user of the possibility of deleting pre-recorded data from the recording medium when the remaining storage capacity of the recording medium is determined to be less than said threshold amount. Still more preferably, the control means is configured to proceed with the recording of said data, utilising the increased storage capacity obtained from the deletion of said pre-recorded data, in accordance with the user input start and stop times.

Preferably, the recording medium comprises a hard disk drive.

Embodiments of the present invention will now be described, by way of example, with reference to the accompanying drawings, in which:
Figure 1 is a block diagram showing a conventional AV system;
Figure 2 is a flow chart showing an example of a method for improving the use of a recording medium of an AV system according to an embodiment of the present invention;
Figure 3 is a view showing an example of a file system of a hard disk; and
Figure 4 is a flow chart showing an example of a method for improving the use of a recording medium of an AV system according to another embodiment of the present invention.

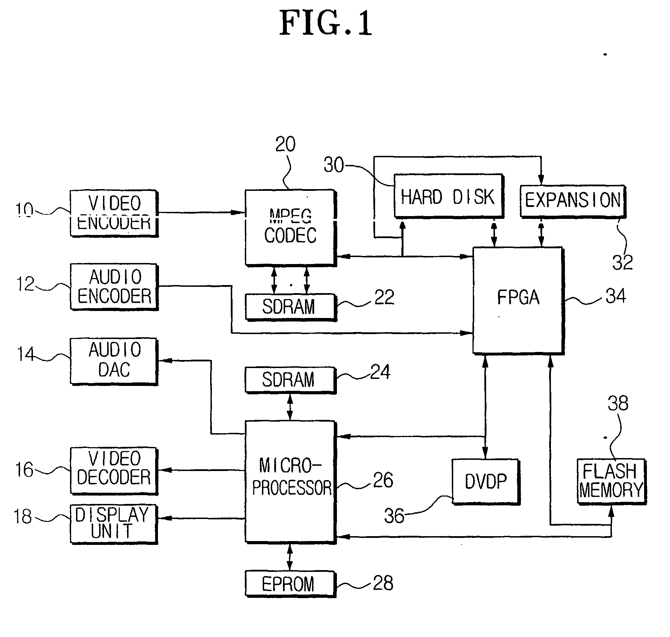

Referring to Figure 1, a video encoder 10 and a video decoder 16 are used to process video signals, and an audio ADC (analog to digital converter) 12 and an audio DAC (digital to analog converter) 14 are used to process audio signals. In addition, a DVDP (digital versatile disc player) 36 is present to read a DVD. An MPEG CODEC 20, for example, is used for compression encoding and decoding of the video and audio signals, and an expansion module 32 is used for expansion, such as coupling to a new device.

A display unit 18 is used to display certain status information, such as control information. FPAG (field-programmable gate array) 34 is, for example, a two-dimensional array comprising a general purpose logic circuit commonly referred to as a cell or a logic block. The FPAG can be programmed, and also can comprise control circuitry.

A microprocessor 26 controls the operation of the entire AV system, while SDRAMs 22 and 24, an EPROM 28 and a flash memory 38 are used to store and retrieve data and programs required to control and operate the AV system. Moreover, a hard disk 30, for example, is used as a recording medium to store and retrieve compression encoded video and audio data.

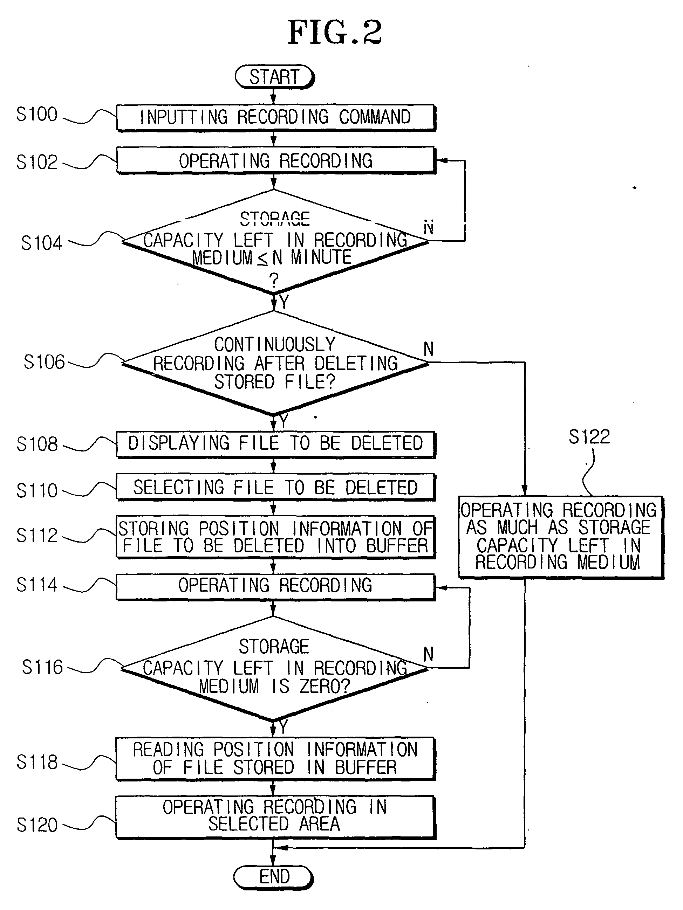

Referring to Figure 2, in step S100 a user inputs a recording command by using, for example, a remote controller, or by pressing a recording button on a control panel of the AV system. The input data is encoded, and a recording operation for recording the data on a recording medium, such as the hard disk 30, is started in step S102.

The microprocessor 26 performs the recording operation, and checks the remaining storage capacity of the hard disk 30 regularly. At this time, the remaining storage capacity is calculated as units of data amount (e.g., bytes) and time. For example, when the recorded data uses 0.75 Mbytes per second, and the remaining storage capacity of the hard disk is 225 Mbytes, then the storage capacity remaining is 225 Mbytes and 300 seconds of recording time. The remaining storage capacity of the hard disk 30 is compared with a time value set in advance, and it is determined in step S104 whether the remaining storage capacity is greater or less than the set time value. When the remaining storage capacity of the hard disk 30 is greater than the set time value, the recording operation is continued in step S102. However, when the remaining storage capacity of the hard disk 30 becomes less than the set time value during the recording operation, the processing proceeds to step S106 where the display unit 18 displays a question asking the user whether to delete files previously recorded on the hard disk 30 and continue the recording operation. When the user does not want to delete a file previously recorded on the recoding medium, the recording continues until the remaining storage capacity of the hard disk 30 is consumed. When the storage capacity of the hard disk 30 is all used up, the recording operation is stopped in step S122. However, when the user chooses in step S106 to delete a previously recorded file and continue the recording operation, a file list recorded on the hard disk 30 is displayed on the display unit 18 in step S108. The user selects a file to be deleted from the file list displayed on the display unit 18 in step S110. The amount of storage capacity secured by deleting a file of the hard disk 30 is expressed as in units of Kbytes and time, and the user is allowed to secure enough recording space.

Position information of the file to be deleted is then stored into a buffer in step S112. In this example, the position information of the file to be deleted is stored in a FAT (file allocation table), and the storage of the data is performed in units referred to as clusters.

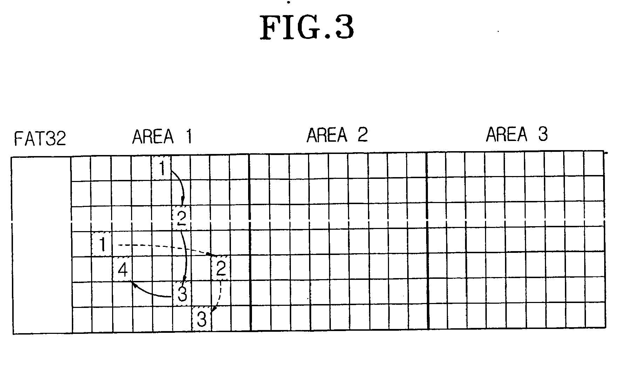

An example of the structure of the cluster unit of the hard disk is shown in Figure 3, as well as the use of a FAT, such as FAT 32 which is used in DSR2 and Windows^{®} 98. As can further be appreciated by one skilled in the art, FAT 32 is a filing system that has been improved from FAT 16 used in DOS and in Windows^{®} 3.1 and 95.

Figure 3 shows the case that the components of file A are shown as being connected by a solid line, and the components of file B are shown as being connected by a dotted line. These components of files A and B are located in area 1, and are stored in more than one cluster (e.g., clusters 1 through 4 for file A, and clusters 1 through 3 for file B) in the hard disk 30, which in this example is divided into three areas. As shown in Figure 3, when a new file is stored on the hard disk 30, the file is stored in more than one cluster. When the new file is stored in several clusters, the clusters do not have to be closed, but rather, the clusters are scattered at various locations in the hard disk 30.

When a new file is stored, an FAT entry having the position and the order of each cluster of the file is configured. When the file is read, the content of the file read from the clusters is configured in order, and the entire content of the file is thus retrieved from the clusters.

Similarly, when a file is deleted, the FAT is referenced. By storing the position information of the file to be deleted, actual deletion of the file is delayed until the file actually needs to be deleted when the storage capacity of the hard disk 30 is completely consumed. Also, delay of the recording operation during the search of the positions at which the file is to be stored can be avoided by referring to FAT. When the position information of the file to be deleted is stored in the buffer, the recording is continuously operated in step S114. The remaining storage capacity of the recording medium is checked to determine whether it is completely consumed. When there is remaining storage capacity in the recording medium, the recording is continuously performed. When the remaining storage capacity is all used up, the position information of the file stored in the buffer is read, and in step S120, the recording is performed to store portions of the file in the areas in which the file to be deleted currently exists.

Although not explicitly shown in Figure 2, when the remaining storage capacity of the hard disk 30 is still less than the set time even after a file has been deleted as discussed above, the above steps so that additional files can be deleted, as necessary, while the recording operation is being performed.

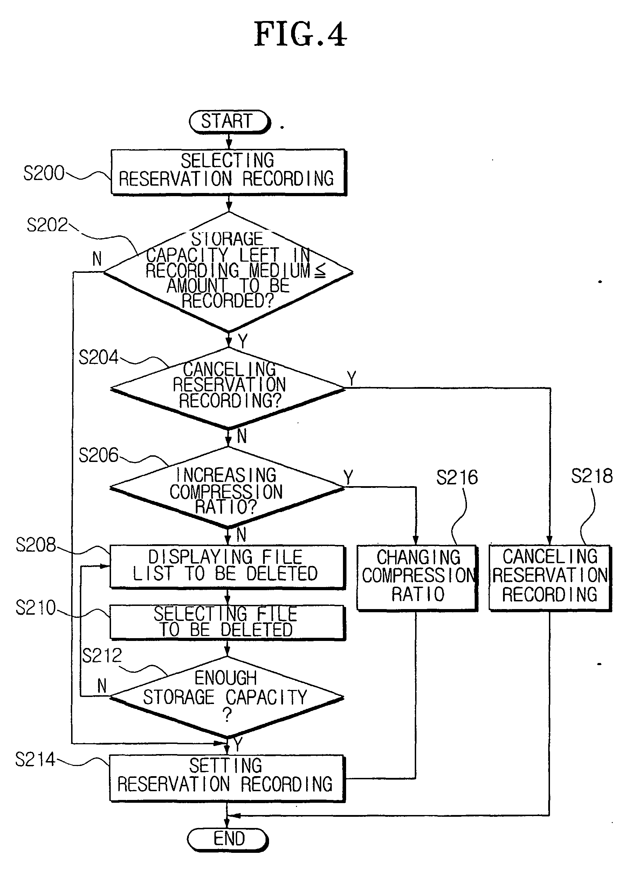

Referring to Figure 4, in another embodiment of the present invention a user selects reservation recording in step S200, where a particular amount of data is to be recorded on the recording medium or, in other words, a particular space in the recording medium is to be "reserved" for the data to be recorded. The amount of data can be measured in terms of the amount of bytes of data or the length of time necessary to record the data. The remaining capacity of the hard disk 30 used as the recording medium when reservation recording is being performed is determined, and compared with the amount of the data to be recorded in step S202. The magnitude of the data for reservation recording can be calculated considering the start time of the reservation recording, the end time of the reservation time, and the compression rate. When the remaining capacity of the recording medium is greater than the amount of the data to be recorded, the reservation recording setting step is finished, as determined in steps S202 and S214. However, when the remaining capacity of the recording medium is less than the amount of the data to be recorded, the user is asked in step S204 whether to finish the reservation recording. When the user inputs a cancellation command, the reservation recording is finished in step S218.

When the user does not want to cancel the reservation recording in step S204, then the user is asked whether to record by increasing the compression ratio in step S206. When the user wants to continue reservation recording at perhaps a lesser quality due to the increase in compression ratio, the compression ratio is changed and the reservation recording setting is completed in steps S216 and S214. When the user does not want to change the compression ratio, or when the recording cannot be completed in the storage capacity remaining in the hard disk 30 even though the compression ratio is changed to the highest degree, a list of files that can be deleted among the files stored on the hard disk 30 is displayed in step S208.

The user selects files to be deleted from the file list in step S210. When the user selects a file from the file list, the storage capacity of the hard disk 30 after deleting the file and the amount of the data to be recorded are compared in step S212. After the comparison, when the capacity for the recording is secured, the reservation recording setting is finished in step S214. When the capacity for the recording is not secured after deleting the selected file, files are continuously deleted until the enough capacity for the recording is secured, as indicated in steps S212, S208 and S210.

As shown in Figure 4, inquiries as to whether to cancel the reservation recording, whether to increase the compression ratio, and the identification of files to be deleted, are consecutively asked. However, it can be more convenient to display the actual content of the hard disk 30 on the display unit at one time to enable the user to select one or more of the files for deletion.

According to the embodiments of the present invention described above, when the storage capacity remaining in the recording medium is less than a predetermined level, the user is notified. Then, the user can delete selected files already stored in the recording medium, so that space for recording can be secured and consecutive recording can be performed.

Furthermore, when reservation recording of the AV system is performed, the recording can be prevented from being stopped due to the space on the disk being totally consumed, because the storage capacity remaining in the recording medium is calculated in advance.

## Claims

1. A recording apparatus for recording data on a recording medium, the apparatus comprising user input means, display means (18), a recording medium (30) and control means (26), the control means (26) being configured to record data on the recording medium (30) in dependence on a user input from the user input means, wherein the control means (26) is configured to determine the remaining storage capacity of the recording medium (30) and to control the display means (18) to inform the user if the remaining storage capacity is less than a threshold amount, **characterised in that** the control means (26) is configured to repeatedly determine whether the remaining storage capacity of the recording medium (30) is less than said threshold amount during the recording of data to the recording medium (30) and to control the display means (18) to inform the user of the possibilities of:
continuing the recording process until the recording medium (30) reaches full capacity or
deleting pre-recorded data from the recording medium (30) and continuing the recording process,
when the remaining storage capacity of the recording medium (30) is determined to be less than the threshold amount.

2. An apparatus according to claim 1, wherein the control means (26) is configured to delete user-selected pre-recorded data from the recording medium (30) in accordance with user inputs from the user input.

3. An apparatus according to claim 1, wherein the control means (26) is configured to store position information of the pre-recorded data earmarked for deletion and continue the recording operation.

4. An apparatus according to claim 3, wherein the control means (26) is configured to record the data to parts of the recording medium (30) corresponding to the position information of the pre-recorded data earmarked for deletion, when the recording medium (30) reaches it's full capacity.

5. An apparatus according to claim 1, wherein the control means (26) is configured to determine the available storage capacity of the recording medium (30) prior to the recording of data on the recording medium (30) and to set said threshold amount in dependence on the period during which said data is to be recorded, determined from user input start and stop times from the user input means, and a compression rate at which said data is to be recorded.

6. An apparatus according to claim 5, wherein the control means (26) is configured to proceed with the recording of said data in accordance with the user input start and stop times when the remaining storage capacity of the recording medium (30) is determined to be greater than said threshold amount.

7. An apparatus according to claim 5, wherein the control means (26) is configured to control the display means (18) to inform the user of the possibility of cancelling the recording operation when the remaining storage capacity of the recording medium (30) is determined to be less than said threshold amount.

8. An apparatus according to claim 5 wherein the control means (26) is configured to control the display means (18) to inform the user of the possibility of increasing the compression rate at which said data is to be recorded when the remaining storage capacity of the recording medium (30) is determined to be less than said threshold amount.

9. An apparatus according to claim 8, wherein the control means (26) is configured to proceed with the recording of said data in accordance with the user input start and stop times at an increased compression rate.

10. An apparatus according to claim 5 or 8, wherein the control means (26) is configured to control the display means (18) to inform the user of the possibility of deleting pre-recorded data from the recording medium (30) when the remaining storage capacity of the recording medium (30) is determined to be less than said threshold amount.

11. An apparatus according to claim 10, wherein the control means (26) is configured to proceed with the recording of said data, utilising the increased storage capacity obtained from the deletion of said pre-recorded data, in accordance with the user input start and stop times.

12. An apparatus according to claim 1, wherein the recording medium (30) comprises a hard disk drive.

13. A method of recording data on a recording medium, comprising recording data on a recording medium (30) in dependence on a user input from a user input means, determining the remaining storage capacity of the recording medium (30) and controlling a display means (18) to inform the user if the remaining storage capacity is less than a threshold amount, **characterised in that** repeatedly determining whether the remaining storage capacity of the recording medium (30) is less than said threshold amount during the recording of data to the recording medium (30) and to control the display means (18) to inform the user of the possibilities of:
continuing the recording process until the recording medium (30) reaches full capacity or
deleting pre-recorded data from the recording medium (30) and continuing the recording process,
when the remaining storage capacity of the recording medium (30) is determined to be less than the threshold amount.

14. A method according to claim 13, comprising deleting user-selected pre-recorded data from the recording medium (30) in accordance with user inputs from the user input.

15. A method according to claim 13, comprising storing position information of the pre-recorded data earmarked for deletion and continue the recording operation.

16. A method according to claim 15, comprising recording the data to parts of the recording medium (30) corresponding to the position information of the pre-recorded data earmarked for deletion, when the recording medium (30) reaches it's full capacity.

17. A method according to claim 13, comprising determining the available storage capacity of the recording medium (30) prior to the recording of data on the recording medium (30) and setting said threshold amount in dependence on the period during which said data is to be recorded, determined from user input start and stop times from the user input means, and a compression rate at which said data is to be recorded.

18. A method according to claim 17, comprising proceeding with the recording of said data in accordance with the user input start and stop times when the remaining storage capacity of the recording medium (30) is determined to be greater than said threshold amount.

19. A method according to claim 17, comprising controlling the display means (18) to inform the user of the possibility of cancelling the recording operation when the remaining storage capacity of the recording medium (30) is determined to be less than said threshold amount.

20. A method according to claim 17 comprising controlling the display means (18) to inform the user of the possibility of increasing the compression rate at which said data is to be recorded when the remaining storage capacity of the recording medium (30) is determined to be less than said threshold amount.

21. A method according to claim 20, comprising proceeding with the recording of said data in accordance with the user input start and stop times at an increased compression rate.

22. A method according to claim 17 or 20, comprising controlling the display means (18) to inform the user of the possibility of deleting pre-recorded data from the recording medium (30) when the remaining storage capacity of the recording medium (30) is determined to be less than said threshold amount.

23. A method according to claim 22, comprising proceeding with the recording of said data, utilising the increased storage capacity obtained from the deletion of said pre-recorded data, in accordance with the user input start and stop times.

## Patentansprüche

1. Aufzeichnungsvorrichtung zum Auszeichnen von Daten auf einem Aufzeichnungsmedium, wobei die Vorrichtung Benutzereingabemittel, Anzeigemittel (18), ein Aufzeichnungsmedium (30) und Steuerungsmittel (26) umfaßt, wobei das Steuerungsmittel (26) so eingerichtet ist, dass es in Abhängigkeit von einer Benutzereingabe von dem Benutzereingabemittel Daten auf dem Aufzeichnungsmedium (30) aufzeichnet, und das Steuerungsmittel (26) so eingerichtet ist, dass es die noch vorhandene Speicherkapazität des Aufzeichnungsmediums (30) ermittelt und das Anzeigemittel (18) dahin steuert, den Benutzer darüber zu informieren, wenn die noch vorhandene Speicherkapazität geringer ist als ein Mindestwert, **dadurch gekennzeichnet, dass** das Steuerungsmittel (26) so eingerichtet ist, dass es während der Aufzeichnung von Daten auf das Aufzeichnungsmedium (30) wiederholt ermittelt, ob die noch vorhandene Speicherkapazität des Aufzeichnungsmediums (30) geringer ist als der Mindestwert, und das Anzeigemittel (18) dahin steuert, den Benutzer über die folgenden Möglichkeiten zu informieren:
Fortsetzen des Aufzeichnungsverfahrens, bis das Aufzeichnungsmedium (30) die volle Kapazität erreicht, oder
Löschen von früher aufgezeichneten Daten von dem Aufzeichnungsmedium (30) und Fortsetzen des Aufzeichnungsverfahrens,
wenn ermittelt wird, dass die noch vorhandene Speicherkapazität des Aufzeichnungsmediums (30) geringer ist als der Mindestwert.

2. Vorrichtung nach Anspruch 1, wobei das Steuerungsmittel (26) so eingerichtet ist, dass es vom Benutzer ausgewählte früher aufgezeichnete Daten von dem Aufzeichnungsmedium (30) gemäß Benutzereingaben von dem Benutzereingabemittel löscht.

3. Vorrichtung nach Anspruch 1, wobei das Steuerungsmittel (26) so eingerichtet ist, dass es Positionsinformationen der früher aufgezeichneten Daten, die für die Löschung vorgesehen sind, speichert und die Aufzeichnungsoperation fortsetzt.

4. Vorrichtung nach Anspruch 3, wobei das Steuerungsmittel (26) so eingerichtet ist, dass es die Daten auf Teile des Aufzeichnungsmediums (30) aufzeichnet, die den Positionsdaten der früher aufgezeichneten Daten entsprechen, die für die Löschung vorgesehen sind, wenn das Aufzeichnungsmedium (30) seine volle Kapazität erreicht.

5. Vorrichtung nach Anspruch 1, wobei das Steuerungsmittel (26) so eingerichtet ist, dass es vor der Aufzeichnung von Daten auf das Aufzeichnungsmedium (30) die verfügbare Speicherkapazität des Aufzeichnungsmediums (30) ermittelt und den Mindestwert in Abhängigkeit von der Zeitdauer einstellt, während der die Daten aufgezeichnet werden sollen, ermittelt aus den vom Benutzer über das Benutzereingabemittel eingegebenen Anfangs- und Beendigungs-Zeiten und von der Kompressionsrate, mit welcher die Daten aufgezeichnet werden sollen.

6. Vorrichtung nach Anspruch 5, wobei das Steuerungsmittel (26) so eingerichtet ist, dass es mit der Aufzeichnung der Daten gemäß den vom Benutzer eingegebenen Anfangs- und Beendigungs-Zeiten fortfährt, wenn ermittelt wird, dass die noch vorhandene Speicherkapazität des Aufzeichnungsmediums (30) größer ist als der Mindestwert.

7. Vorrichtung nach Anspruch 5, wobei das Steuerungsmittel (26) so eingerichtet ist, dass es das Anzeigemittel (18) dahin steuert, den Benutzer über die Möglichkeit zu informieren, die Aufzeichnungsoperation zu annullieren, wenn ermittelt wird, dass die noch vorhandene Speicherkapazität des Aufzeichnungsmediums (30) geringer ist als der Mindestwert.

8. Vorrichtung nach Anspruch 5, wobei das Steuerungsmittel (26) so eingerichtet ist, dass es das Anzeigemittel (18) dahin steuert, den Benutzer über die Möglichkeit zu informieren, die Kompressionsrate zu erhöhen, mit welcher die Daten aufgezeichnet werden sollen, wenn ermittelt wird, dass die noch vorhandene Speicherkapazität des Aufzeichnungsmediums (30) geringer ist als der Mindestwert.

9. Vorrichtung nach Anspruch 8, wobei das Steuerungsmittel (26) so eingerichtet ist, dass es mit der Aufzeichnung der Daten gemäß den vom Benutzer eingegebenen Anfangs- und Beendigungs-Zeiten mit erhöhter Kompressionsrate fortfährt.

10. Vorrichtung nach Anspruch 5 oder 8, wobei das Steuerungsmittel (26) so eingerichtet ist, dass es das Anzeigemittel (18) dahin steuert, den Benutzer über die Möglichkeit zu informieren, früher aufgezeichnete Daten von dem Aufzeichnungsmedium (30) zu löschen, wenn ermittelt wird, dass die noch vorhandene Speicherkapazität des Aufzeichnungsmediums (30) geringer ist als der Mindestwert.

11. Vorrichtung nach Anspruch 10, wobei das Steuerungsmittel (26) so eingerichtet ist, dass es unter Verwendung der vergrößerten Speicherkapazität, die aus der Löschung der früher aufgezeichneten Daten erhalten wurde, mit der Aufzeichnung der Daten gemäß den vom Benutzer eingegebenen Anfangs- und Beendigungs-Zeiten fortfährt.

12. Vorrichtung nach Anspruch 1, wobei das Aufzeichnungsmedium (30) ein Festplattenlaufwerk umfaßt.

13. Verfahren zum Aufzeichnen von Daten auf einem Aufzeichnungsmedium, welches das Aufzeichnen von Daten auf einem Aufzeichnungsmedium (30) in Abhängigkeit von einer Benutzereingabe von einem Benutzereingabemittel, das Ermitteln der noch vorhandenen Speicherkapazität des Aufzeichnungsmediums (30) und das Steuern eines Anzeigemittels (18) dahin umfaßt, den Benutzer darüber zu informieren, wenn die noch vorhandene Speicherkapazität geringer ist als ein Mindestwert, **gekennzeichnet durch** das wiederholte Ermitteln während der Aufzeichnung von Daten auf das Aufzeichnungsmedium (30), ob die noch vorhandene Speicherkapazität des Aufzeichnungsmediums (30) geringer ist als der Mindestwert, und das Steuern des Anzeigemittels (18) dahin, den Benutzer über die folgenden Möglichkeiten zu informieren:
Fortsetzen des Aufzeichnungsverfahrens, bis das Aufzeichnungsmedium (30) die volle Kapazität erreicht, oder
Löschen von früher aufgezeichneten Daten von dem Aufzeichnungsmedium (30) und Fortsetzen des Aufzeichnungsverfahrens,
wenn ermittelt wird, dass die noch vorhandene Speicherkapazität des Aufzeichnungsmediums (30) geringer ist als der Mindestwert.

14. Verfahren nach Anspruch 13, welches das Löschen von vom Benutzer ausgewählten früher aufgezeichneten Daten von dem Aufzeichnungsmedium (30) gemäß Benutzereingaben von dem Benutzereingabemittel umfaßt.

15. Verfahren nach Anspruch 13, welches das Speichern von Positionsinformationen der früher aufgezeichneten Daten, die für die Löschung vorgesehen sind, und das Fortsetzen der Aufzeichnungsoperation umfaßt.

16. Verfahren nach Anspruch 15, welches das Aufzeichnen von Daten auf Teile des Aufzeichnungsmediums (30) umfaßt, die den Positionsdaten der früher aufgezeichneten Daten entsprechen, die für die Löschung vorgesehen sind, wenn das Aufzeichnungsmedium (30) seine volle Kapazität erreicht.

17. Verfahren nach Anspruch 13, welches das Ermitteln der verfügbaren Speicherkapazität des Aufzeichnungsmediums (30) vor der Aufzeichnung von Daten auf das Aufzeichnungsmedium (30) und das Einstellen des Mindestwerts in Abhängigkeit von der Zeitdauer umfaßt, während der die Daten aufgezeichnet werden sollen, ermittelt aus den vom Benutzer über das Benutzereingabemittel eingegebenen Anfangs- und Beendigungs-Zeiten und von der Kompressionsrate, mit welcher die Daten aufgezeichnet werden sollen.

18. Verfahren nach Anspruch 17, welches das Fortfahren mit der Aufzeichnung der Daten gemäß den vom Benutzer eingegebenen Anfangs- und Beendigungs-Zeiten umfaßt, wenn ermittelt wird, dass die noch vorhandene Speicherkapazität des Aufzeichnungsmediums (30) größer ist als der Mindestwert.

19. Verfahren nach Anspruch 17, welches das Steuern des Anzeigemittels (18) dahin umfaßt, den Benutzer über die Möglichkeit zu informieren, die Aufzeichnungsoperation zu annullieren, wenn ermittelt wird, dass die noch vorhandene Speicherkapazität des Aufzeichnungsmediums (30) geringer ist als der Mindestwert.

20. Verfahren nach Anspruch 17, welches das Steuern des Anzeigemittels (18) dahin umfaßt, den Benutzer über die Möglichkeit zu informieren, die Kompressionsrate zu erhöhen, mit welcher die Daten aufgezeichnet werden sollen, wenn ermittelt wird, dass die noch vorhandene Speicherkapazität des Aufzeichnungsmediums (30) geringer ist als der Mindestwert.

21. Verfahren nach Anspruch 20, welches das Fortfahren mit der Aufzeichnung der Daten gemäß den vom Benutzer eingegebenen Anfangs- und Beendigungs-Zeiten mit erhöhter Kompressionsrate umfaßt.

22. Verfahren nach Anspruch 17 oder 20, welches das Steuern des Anzeigemittels (18) dahin umfaßt, den Benutzer über die Möglichkeit zu informieren, früher aufgezeichnete Daten von dem Aufzeichnungsmedium (30) zu löschen, wenn ermittelt wird, dass die noch vorhandene Speicherkapazität des Aufzeichnungsmediums (30) geringer ist als der Mindestwert.

23. Verfahren nach Anspruch 22, welches das Fortfahren mit der Aufzeichnung der Daten gemäß den vom Benutzer eingegebenen Anfangs- und Beendigungs-Zeiten unter Verwendung der vergrößerten Speicherkapazität umfaßt, die aus der Löschung der früher aufgezeichneten Daten erhalten wurde.

## Revendications

1. Appareil d'enregistrement pour enregistrer des données sur un support d'enregistrement, l'appareil comprenant un moyen d'entrée utilisateur, un moyen d'affichage (18), un support d'enregistrement (30) et un moyen de commande (26), le moyen de commande (26) étant configuré pour enregistrer les données sur le support d'enregistrement (30) en fonction d'une entrée utilisateur à partir du moyen d'entrée utilisateur, dans lequel le moyen de commande (26) est configuré pour déterminer la capacité de stockage restante du support d'enregistrement (30) et pour commander le moyen d'affichage (18) pour informer l'utilisateur si la capacité de stockage restante est inférieure à un montant seuil, **caractérisé en ce que** le moyen de commande (26) est configuré pour déterminer de façon répétée si la capacité de stockage restante du support d'enregistrement (30) est inférieure audit montant seuil durant l'enregistrement des données sur le support d'enregistrement (30) et pour commander le moyen d'affichage (18) pour informer l'utilisateur des possibilités de :
poursuivre le processus d'enregistrement jusqu'à ce que le support d'enregistrement (30) atteigne une capacité totale ou
supprimer les données préenregistrées du support d'enregistrement (30) et de poursuivre le processus d'enregistrement,
lorsque l'on détermine que la capacité de stockage restante du support d'enregistrement (30) est inférieure au montant seuil.

2. Appareil selon la revendication 1, dans lequel le moyen de commande (26) est configuré pour supprimer les données préenregistrées sélectionnées par l'utilisateur du support d'enregistrement (30) selon les entrées utilisateur à partir du moyen d'entrée utilisateur.

3. Appareil selon la revendication 1, dans lequel le moyen de commande (26) est configuré pour stocker des informations de position des données préenregistrées réservées à la suppression et poursuivre l'opération d'enregistrement.

4. Appareil selon la revendication 3, dans lequel le moyen de commande (26) est configuré pour enregistrer les données sur des parties du support d'enregistrement (30) correspondant aux informations de position des données préenregistrées réservées à la suppression, lorsque le support d'enregistrement (30) atteint sa capacité totale.

5. Appareil selon la revendication 1, dans lequel le moyen de commande (26) est configuré pour déterminer la capacité de stockage disponible du support d'enregistrement (30) avant l'enregistrement des données sur le support d'enregistrement (30) et pour définir ledit montant seuil en fonction de la période durant laquelle lesdites données doivent être enregistrées, déterminée par les heures de début et de fin d'entrée utilisateur à partir du moyen d'entrée utilisateur, et un taux de compression auquel lesdites données doivent être enregistrées.

6. Appareil selon la revendication 5, dans lequel le moyen de commande (26) est configuré pour poursuivre l'enregistrement desdites données selon les heures de début et de fin d'entrée utilisateur lorsque l'on détermine que la capacité de stockage restante du support d'enregistrement (30) est supérieure audit montant seuil.

7. Appareil selon la revendication 5, dans lequel le moyen de commande (26) est configuré pour commander le moyen d'affichage (18) pour informer l'utilisateur de la possibilité d'annuler l'opération d'enregistrement lorsque l'on détermine que la capacité de stockage restante du support d'enregistrement (30) est inférieure audit montant seuil.

8. Appareil selon la revendication 5, dans lequel le moyen de commande (26) est configuré pour commander le moyen d'affichage (18) pour informer l'utilisateur de la possibilité d'augmenter le taux de compression auquel lesdites données doivent être enregistrées lorsque l'on détermine que la capacité de stockage restante du support d'enregistrement (30) est inférieure audit montant seuil.

9. Appareil selon la revendication 8, dans lequel le moyen de commande (26) est configuré pour poursuivre l'enregistrement desdites données selon les heures de début et de fin d'entrée utilisateur à un taux de compression accru.

10. Appareil selon la revendication 5 ou 8, dans lequel le moyen de commande (26) est configuré pour commander le moyen d'affichage (18) pour informer l'utilisateur de la possibilité de supprimer les données préenregistrées du support d'enregistrement (30) lorsque l'on détermine que la capacité de stockage restante du support d'enregistrement (30) est inférieure audit montant seuil.

11. Appareil selon la revendication 10, dans lequel le moyen de commande (26) est configuré pour poursuivre l'enregistrement desdites données en utilisant la capacité de stockage accrue obtenue de la suppression desdites données préenregistrées, selon les heures de début et de fin d'entrée utilisateur.

12. Appareil selon la revendication 1, dans lequel le support d'enregistrement (30) comprend un lecteur de disque dur.

13. Méthode d'enregistrement de données sur un support d'enregistrement, comprenant l'enregistrement des données sur un support d'enregistrement (30) en fonction d'une entrée utilisateur à partir d'un moyen d'entrée utilisateur, la détermination de la capacité de stockage restante du support d'enregistrement (30) et la commande d'un moyen d'affichage (18) pour informer l'utilisateur si la capacité de stockage restante est inférieure à un montant seuil, **caractérisée** dans le fait de déterminer de façon répétée si la capacité de stockage restante du support d'enregistrement (30) est inférieure audit montant seuil durant l'enregistrement des données sur le support d'enregistrement (30), et de commander le moyen d'affichage (18) pour informer l'utilisateur des possibilités de :
poursuivre le processus d'enregistrement jusqu'à ce que le support d'enregistrement (30) atteigne une capacité complète ou
supprimer les données préenregistrées du support d'enregistrement (30) et de poursuivre le processus d'enregistrement,
lorsque l'on détermine que la capacité de stockage restante du support d'enregistrement (30) est inférieure au montant seuil.

14. Méthode selon la revendication 13, comprenant la suppression des données préenregistrées sélectionnées par l'utilisateur du support d'enregistrement (30) selon les entrées utilisateur à partir du moyen d'entrée utilisateur.

15. Méthode selon la revendication 13, comprenant le stockage d'informations de position des données préenregistrées réservées à la suppression et la poursuite de l'opération d'enregistrement.

16. Méthode selon la revendication 15, comprenant l'enregistrement des données sur des parties du support d'enregistrement (30) correspondant aux informations de position des données préenregistrées réservées à la suppression, lorsque le support d'enregistrement (30) atteint sa capacité totale.

17. Méthode selon la revendication 13, comprenant la détermination de la capacité de stockage disponible du support d'enregistrement (30) avant l'enregistrement des données sur le support d'enregistrement (30) et la définition dudit montant seuil en fonction de la période durant laquelle lesdites données doivent être enregistrées, déterminée par les heures de début et de fin d'entrée utilisateur à partir du moyen d'entrée utilisateur, et un taux de compression auquel lesdites données doivent être enregistrées.

18. Méthode selon la revendication 17, comprenant la poursuite de l'enregistrement desdites données selon les heures de début et de fin d'entrée utilisateur lorsque l'on détermine que la capacité de stockage restante du support d'enregistrement (30) est supérieure audit montant seuil.

19. Méthode selon la revendication 17, comprenant la commande du moyen d'affichage (18) pour informer l'utilisateur de la possibilité d'annuler l'opération d'enregistrement lorsque l'on détermine que la capacité de stockage restante du support d'enregistrement (30) est inférieure audit montant seuil.

20. Méthode selon la revendication 17, comprenant la commande du moyen d'affichage (18) pour informer l'utilisateur de la possibilité d'augmenter le taux de compression auquel lesdites données doivent être enregistrées lorsque l'on détermine que la capacité de stockage restante du support d'enregistrement (30) est inférieure audit montant seuil.

21. Méthode selon la revendication 20, comprenant la poursuite de l'enregistrement desdites données selon les heures de début et de fin d'entrée utilisateur à un taux de compression accru.

22. Méthode selon la revendication 17 ou 20, comprenant la commande du moyen d'affichage (18) pour informer l'utilisateur de la possibilité de supprimer les données préenregistrées du support d'enregistrement (30) lorsque l'on détermine que la capacité de stockage restante du support d'enregistrement (30) est inférieure audit montant seuil.

23. Méthode selon la revendication 22, comprenant la poursuite de l'enregistrement desdites données en utilisant la capacité de stockage accrue obtenue de la suppression desdites données préenregistrées, selon les heures de début et de fin d'entrée utilisateur.
